# FASCICULE DE BREVET EUROPEEN

(11) **EP 2 394 910 B1**
(45) Date de publication et mention de la délivrance du brevet: **27.08.2014**
(21) Numéro de dépôt: 11166737.4
(22) Date de dépôt: 19.05.2011
(51) Int. Cl.: B64C 1/14

(54) **Fenêtre ouvrante d'aéronef et aéronef équipé d'au moins une telle fenêtre**
Öffnendes Flugzeugfenster sowie Flugzeug, ausgestattet mit einem solchen Fenster
Openable aircraft window and aircraft equipped with such a window

(30) Priorité: 19.05.2010 FR 1053866
(43) Date de publication de la demande: 14.12.2011
(73) Titulaire: AIRBUS OPERATIONS (S.A.S), 31060 Toulouse (FR)
(72) Inventeur: Lamat, Luc, 31200 Toulouse (FR); Maurens, Noël, 32430 Encausse (FR)
(74) Mandataire: Gicquel, Olivier Yves Gérard

(56) Documents cités:
- EP-A1- 0 377 545
- EP-A1- 1 424 278
- FR-A- 879 567
- GB-A- 560 255
- US-A- 3 050 790

## Description

La présente invention concerne une fenêtre ouvrante d'aéronef, et notamment une fenêtre latérale d'un poste de pilotage destinée à être manoeuvrée manuellement par un membre de l'équipage. L'invention vise encore un aéronef comportant un poste de pilotage (ou cockpit) équipé d'au moins une telle fenêtre.

L'état de l'art est illustré par le document US-A-3,050,790.

On connaît des fenêtres latérales ouvrantes pour poste de pilotage. Ces fenêtres qui sont manoeuvrables depuis l'intérieur de l'aéronef, forment des ouvertures présentant des fonctions très utiles.

Notamment, elles constituent des issues de secours, des aérations du poste de pilotage pour évacuer des fumées en cas d'incendie ou encore, offrent un moyen simple de voir la piste en cas de manque de visibilité, par exemple en raison d'une glace frontale sale.

On connaît ainsi une fenêtre de poste de pilotage comprenant une vitre fixée sur un encadrement rigide, lui-même relié à la structure par un mécanisme de verrouillage apte à immobiliser la fenêtre, par rapport à la structure environnante de l'aéronef en position ouverte, fermée ou semi-fermée.

Une poignée unique permet de réaliser toutes les manoeuvres de la fenêtre. Ainsi, depuis son siège, le pilote, ou co-pilote, appuie sur un bouton de déverrouillage de la poignée, la tourne, puis la tire vers l'arrière pour faire reculer l'ensemble ouvrant formé par la vitre, son encadrement rigide et son mécanisme.

Cet ensemble est alors guidé en déplacement par un rail inférieur et un rail supérieur, lesquels font partie intégrante de la structure du poste de pilotage. Pour cela, le mécanisme de la fenêtre est en liaison avec le fond de ces rails par l'intermédiaire d'au moins trois galets. Chacun de ces galets, complété d'un jeu de galets en liaison avec les bords internes des rails, est porté par un chariot formant un boggie.

Cependant, on constate non seulement que le réglage de ces boggies est complexe, cette tâche étant consommatrice de temps, mais encore que ces boggies présentent une usure relativement rapide nécessitant des interventions de maintenance par des opérateurs qualifiés, lesquelles sont coûteuses.

Par ailleurs, ce mécanisme comporte deux crochets placés au dessus du montant supérieur de l'encadrement rigide de la vitre, et deux autres crochets reliés aux boggies se déplaçant dans le rail inférieur. Ces crochets permettent d'encaisser l'impact à haute énergie du choc d'un oiseau sur la fenêtre en transférant les efforts créés par ce choc à la structure environnante du poste de pilotage. L'ensemble ouvrant est également maintenu en position de fermeture grâce à un principe d'arc-boutement des supports des boggies.

Ce principe d'arc-boutement est indispensable au bon fonctionnement de l'ensemble ouvrant. En effet, en plus de cette fonction de maintien de l'ensemble ouvrant en position de fermeture, il constitue une sécurité supplémentaire en cas de choc à l'oiseau. Sous l'effet d'un choc, on obtient un sur-verrouillage de l'ensemble ouvrant, l'ensemble ouvrant ayant alors tendance à se verrouiller plutôt qu'à se déverrouiller.

Néanmoins, ce principe d'arc-boutement présente des inconvénients, notamment au niveau des réglages (jeux, écrasement du joint d'étanchéité du pourtour de l'ensemble ouvrant, etc.).

On constate, par ailleurs, que le montant arrière de l'encadrement rigide de la fenêtre a été largement épaissi en raison de la position des crochets, et ce, afin de pouvoir résister à l'impact d'un choc à l'oiseau.

Ce système d'immobilisation de l'ensemble ouvrant, de par le nombre de pièces qu'il requiert, et l'épaississement de l'encadrement mobile qui en découle, est donc améliorable quant au poids total de la fenêtre ainsi équipée.

Lors du dégagement de l'ensemble ouvrant, un premier mouvement en translation de cet ensemble causé par la rotation de la poignée est obtenu grâce à un système de renvoie par biellette et une transmission par cardan à la partie supérieure de l'ensemble ouvrant.

Or, il est connu que ces joints de cardan qui assurent la transmission mécanique présentent plusieurs inconvénients, notamment au niveau de l'encombrement, et de la masse.

La présente invention vise à répondre à ces divers inconvénients en proposant une fenêtre de poste de pilotage d'aéronef dont la conception originale permette de résoudre les problèmes techniques posés par les fenêtres de l'art antérieur.

L'invention vise, en conséquence, une fenêtre ouvrante de poste de pilotage d'aéronef, simple dans sa conception et dans son mode opératoire, robuste et présentant un encombrement intérieur réduit tout en assurant un allègement important en poids par rapport aux fenêtres ouvrantes de cockpit de l'art antérieur.

Elle autorise également une ouverture manuelle en moins de dix secondes pour une utilisation en tant qu'issue de secours, sans assistance d'aucune autre source d'énergie telle que pyrotechnique. Enfin, cette fenêtre résiste au choc à l'oiseau.

A cet effet, l'invention concerne une fenêtre ouvrante d'aéronef comprenant au moins une vitre munie d'un encadrement mobile, un ensemble comprenant ledit encadrement mobile et ladite au moins une vitre étant mobile par rapport à un encadrement fixe, un organe de manoeuvre dudit ensemble mobile, un dispositif d'ouverture/fermeture et de verrouillage/déverrouillage dudit ensemble mobile actionné par ledit organe de manoeuvre et des moyens de guidage et de support dudit ensemble mobile.

Selon l'invention,
- ledit encadrement fixe comporte au moins un logement pour recevoir une partie au moins d'un premier bord latéral dudit encadrement mobile, ladite partie dudit premier bord latéral venant en appui dans ledit au moins un logement par lequel ou lesquels ledit premier bord latéral est maintenu lorsque la fenêtre est en position de fermeture,
- ladite partie au moins du premier bord latéral étant reçue dans ledit logement, les moyens de guidage et de support de cet ensemble mobile autorisent une rotation de cet ensemble autour d'un axe de rotation passant par le premier bord latéral de manière à placer l'autre bord latéral de cet encadrement mobile en position de fermeture ou de dégagement,
- lesdits moyens de guidage et de support comprennent:
   * un rail supérieur et un rail inférieur solidaires de l'encadrement fixe,
   * des ensembles de guidage et de support, chacun de ces ensembles de guidage et de support comprenant un organe de support pour assurer une fonction support et une bille porteuse placée à l'extrémité de cet organe de support, ledit organe de support étant relié à l'encadrement mobile et ladite bille porteuse se déplaçant dans un rail correspondant desdits rails supérieur et inférieur, et
   * ledit rail inférieur comprenant une portion de rail principal et une portion de rail secondaire en communication l'une avec l'autre, ladite portion de rail secondaire est inclinée par rapport à ladite portion de rail principal en ayant une forme courbe pour permettre la rotation dudit ensemble mobile entre une position de fermeture et une position de dégagement.

Ainsi, lors de la fermeture de la fenêtre, l'ensemble mobile vient se loger derrière une ou plusieurs butées fixes solidaires de l'encadrement fixe formant chacune un logement, puis se verrouille sur le bord opposé au premier bord latéral. De ce fait, il n'y a plus de mécanisme de verrouillage au niveau de ce premier bord latéral allégeant en conséquence la fenêtre et la rendant plus facile à régler.

De préférence, l'ensemble mobile vient se loger derrière plusieurs butées formant chacune un logement.

L'ouverture de cette fenêtre peut avantageusement rester, pour sa part, classique puisqu'elle peut se faire en reculant l'ensemble mobile vers l'arrière.

Dans différents modes de réalisation particuliers de cette fenêtre ouvrante d'aéronef, chacun ayant ses avantages particuliers et susceptibles de nombreuses combinaisons techniques possibles :
- le premier bord latéral étant incliné, cet axe de rotation est parallèle à ce premier bord latéral pour permettre à ce dernier d'être reçu dans ledit au moins un logement sur toute sa hauteur,

On entend par « inclinaison dudit premier bord latéral », une inclinaison de ce premier bord latéral par rapport à un plan passant par le seuil de fenêtre.
- les parties supérieure et inférieure de ce premier bord latéral étant placées sur l'axe de rotation, au moins une de ces parties comprend un bras d'extension de l'encadrement mobile,

De préférence, c'est la partie inférieure de ce premier bord latéral qui comporte ledit bras d'extension de l'encadrement mobile.

Chacun desdits moyens de guidage et de support comprend une bille porteuse placée à l'extrémité d'un organe de support pour assurer la fonction support, cet organe de support étant relié à l'encadrement mobile.

De manière avantageuse, cet organe de support est placé à l'extrémité supérieure de l'encadrement mobile du côté de son premier bord latéral destiné à être reçu dans le logement de l'encadrement fixe de la fenêtre qui lui est associé. Un second organe de support est placé à l'extrémité inférieure du même encadrement mobile.

De plus, ces organes de support sont chacun équipés d'un galet de roulement placé en contact avec un rail de l'organe de guidage pour assurer la fonction de guidage.

De préférence, l'ensemble de support et de guidage placé sous le bord latéral de l'encadrement mobile opposé à celui destiné à être reçu dans ledit au moins un logement de l'encadrement fixe de la fenêtre, comporte un bras tel qu'un levier, mobile en rotation et portant à son extrémité un galet destiné à venir prendre appui contre un flanc du rail inférieur pour assurer le mouvement d'ouverture de la fenêtre.

De manière plus générale, chaque ensemble de support et de guidage comprend un galet de roulement porté par un organe de support ayant un logement dans lequel est placé une bille porteuse de sorte que cette bille porteuse soit au moins partiellement placée en saillie de cet ensemble.

Un tel ensemble de support et de guidage est donc avantageusement apte à se mouvoir dans plusieurs directions et à répondre instantanément à une sollicitation de changement d'inclinaison.

L'organe de support de la bille porteuse comprend un élément d'accouplement de cet ensemble à l'ensemble mobile de la fenêtre.

L'élément d'accouplement peut être un simple axe de liaison.

De préférence, le dispositif d'ouverture/ fermeture comprend au moins un organe de blocage placé uniquement sur le bord latéral de l'encadrement mobile opposé à celui destiné à être reçu dans ledit au moins un logement de l'encadrement fixe, pour immobiliser l'ensemble mobile en position de fermeture.

A titre illustratif, le dispositif d'ouverture/ fermeture comprend au moins trois organes de blocage répartis sur le bord latéral de l'encadrement mobile opposé à celui destiné à être reçu dans ledit au moins un logement de l'encadrement fixe.

Chacun de ces organes de blocage comporte un bras mobile comportant une découpe plane destinée à coopérer avec une butée fixe placée sur ledit encadrement fixe pour assurer le verrouillage dudit ensemble mobile en position de fermeture,

Pour ce faire, ces organes de blocage, ou verrous, guidés en translation dans l'encadrement mobile, sont avantageusement équipés d'un galet qui vient rouler sur les butées fixes de l'encadrement fixe.
- cette butée fixe comprend au moins une première pente et une seconde pente, la première pente assurant l'écrasement de l'élément d'étanchéité de l'encadrement mobile tandis que la seconde pente est destinée à empêcher le déverrouillage de l'ensemble mobile en cas de choc à l'oiseau,
- l'organe de manoeuvre comporte une seule poignée autorisant le déplacement, l'entrainement en rotation et l'actionnement du dispositif d'ouverture/ fermeture, ladite poignée étant articulée,
   Cette poignée autorise l'actionnement du dispositif de verrouillage/déverrouillage, l'actionnement du dispositif d'ouverture/fermeture et le déplacement de la fenêtre.
- cette poignée est reliée à un mécanisme dont l'extrémité actionne de manière séquentielle deux cames de débrayage superposées pour d'une part assurer le verrouillage/déverrouillage puis d'autre part assurer le mouvement d'ouverture/ fermeture de la fenêtre,
- ce dispositif de verrouillage / déverrouillage / ouverture/ fermeture comprenant des organes de blocage (ou verrous) placés sur l'autre bord latéral de cet encadrement mobile, la came pilotant le mécanisme de verrouillage/ déverrouillage est reliée à au moins certains de ces organes de blocage par un câble de traction et de poussée (ce qui permet de ne pas utiliser de liaisons par joint de cardans comme cela est fait dans l'art antérieur),
- les logements comprennent au moins trois butées fixes, chacune de ces butées comprenant des moyens de réglage du jeu entre la butée correspondante et l'encadrement mobile.

L'invention concerne également une fenêtre et un support, comprenant :
- un rail supérieur et un rail inférieur, ledit rail inférieur comprenant une portion de rail principal et une portion de rail secondaire en communication l'une avec l'autre, et ladite portion de rail secondaire est inclinée par rapport à ladite portion de rail principal en ayant une forme courbe pour permettre la rotation dudit ensemble mobile entre une position de fermeture et une position de dégagement.

L'invention concerne aussi un poste de pilotage d'un aéronef équipé d'au moins une fenêtre telle que décrite précédemment.

L'invention concerne encore un aéronef comprenant un poste de pilotage. De préférence, ce poste de pilotage comporte au moins une fenêtre d'aéronef telle que décrite précédemment.

Dans différents modes de réalisation possibles de cette fenêtre ouvrante de cockpit d'aéronef, l'invention sera décrite plus en détails en référence aux dessins annexés dans lesquels :
- la figure 1 représente schématiquement une fenêtre d'aéronef selon un mode de réalisation particulier de l'invention ;
- la figure 2 montre la fenêtre de la figure 1 en position de dégagement ;
- la figure 3 est une vue partielle et élargie selon la Flèche F de l'ensemble mobile de la figure 1 montrant un ensemble de support et de guidage comportant un bras mobile en rotation pour créer le mouvement d'ouverture de l'encadrement mobile ;
- la figure 4 est une vue de dessus du rail de guidage inférieur de la fenêtre de la figure 1 ;
- la figure 5 est une vue partielle et élargie du rail de guidage inférieur et du montant inférieur arrière de l'ensemble mobile de la figure 1 montrant le déplacement de l'ensemble de support et de guidage de la figure 3 lors du dégagement de la fenêtre ;

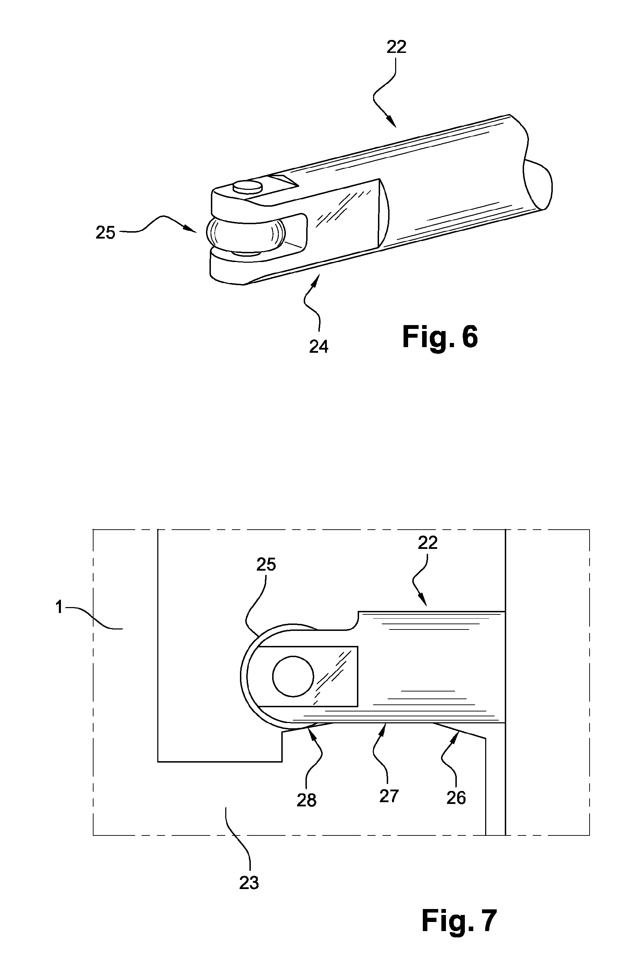

- la figure 6 est une vue partielle et en perspective d'un verrou placé sur le bord latéral arrière de l'encadrement mobile de la figure 1 ;
- la figure 7 montre le déplacement du verrou de la figure 6 pour immobiliser l'ensemble mobile en position de fermeture ;

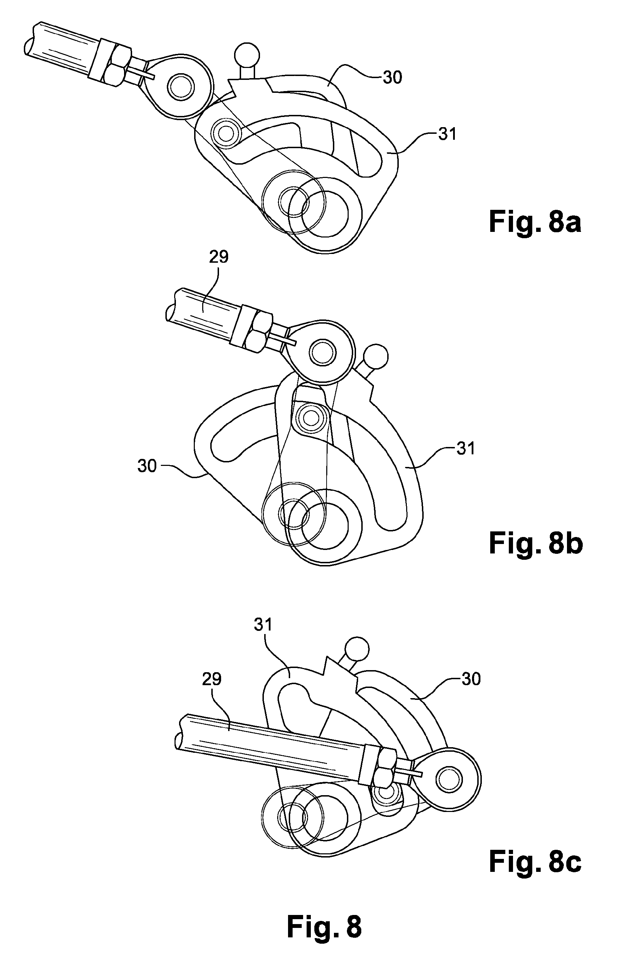

- la figure 8 montre les principales étapes de fonctionnement des cames de débrayage superposées pour d'une part assurer le déverrouillage ou le verrouillage du dispositif de verrouillage/ déverrouillage dudit ensemble mobile puis d'autre part d'assurer le mouvement d'ouverture ou de fermeture de ladite fenêtre de la figure 1, la Fig.8 a) montre l'ensemble mobile en position de fermeture et verrouillée, la Fig.8 b) montre l'ensemble mobile en position de fermeture et déverrouillée et la Fig.8 c) montre l'ensemble mobile en position d'ouverture et déverrouillée.

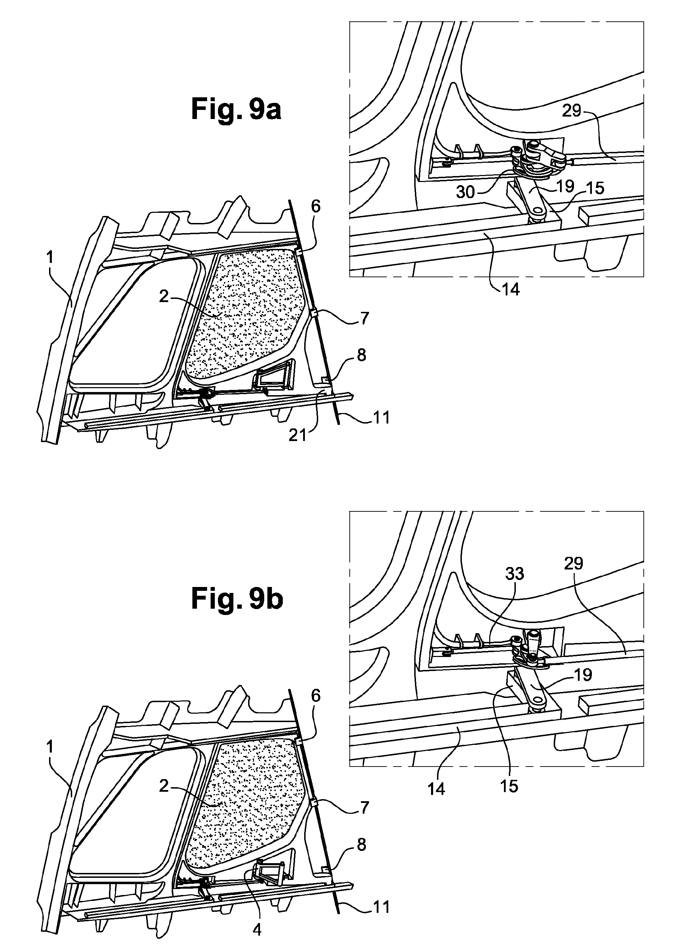

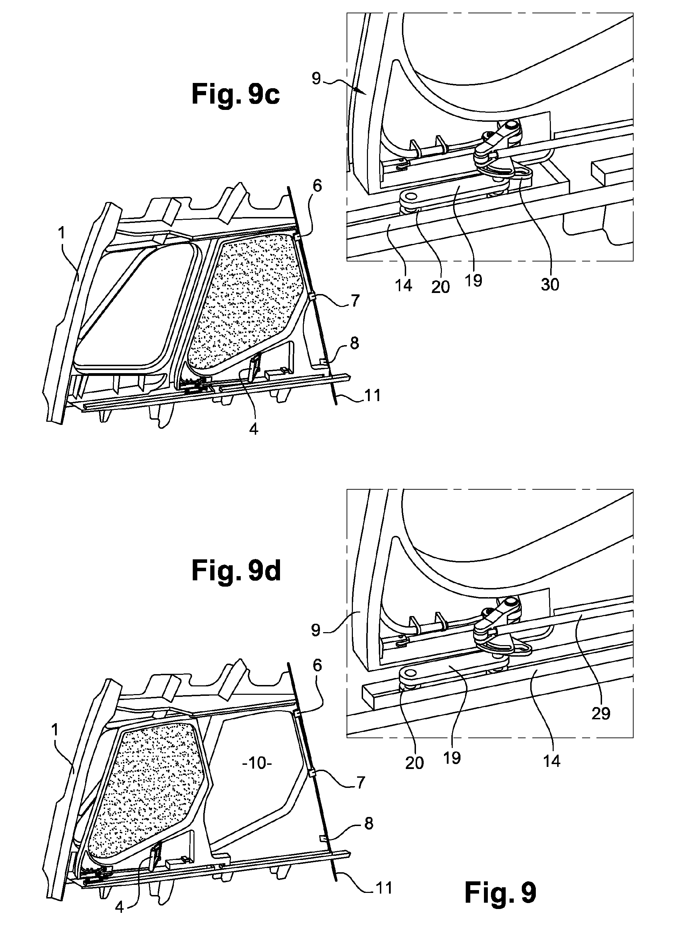

- la figure 9 montre les principales étapes d'ouverture/fermeture de la fenêtre de la figure 1 avec mise en parallèle, de vues partielles et élargies du déplacement correspondant des cames de débrayage superposées et de l'ensemble de support et de guidage dans le rail de guidage inférieur, la Fig.9 a) montre la fenêtre en position de fermeture et verrouillée, la Fig.9 b) montre la fenêtre en position de fermeture et déverrouillée, la Fig. 9 c) montre la fenêtre en position de dégagement et la Fig.9 d) montre la fenêtre en position ouverte.

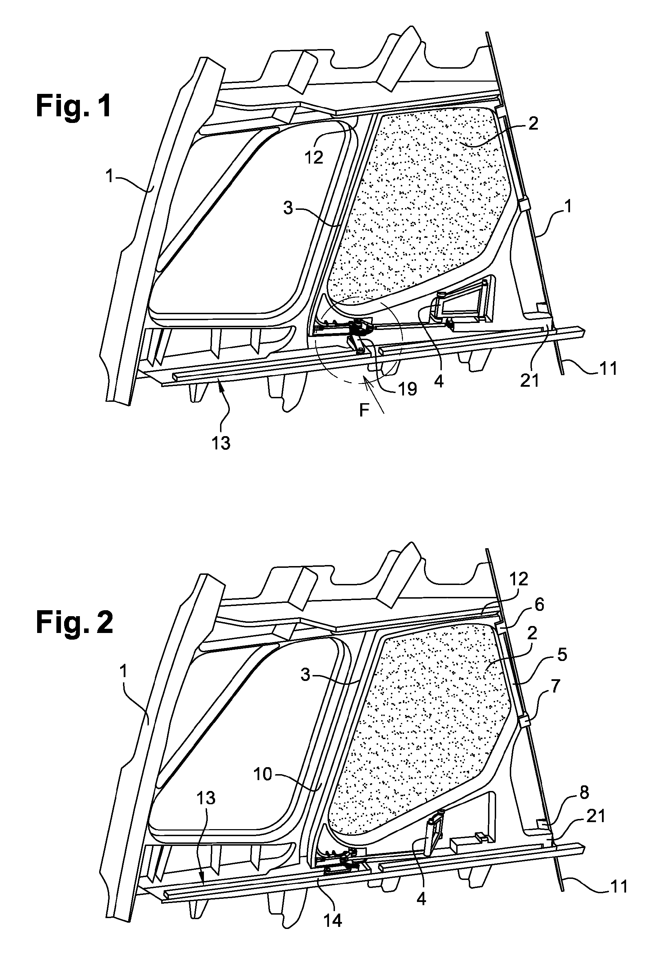

La Figure 1 montre une fenêtre d'aéronef selon un mode de réalisation préféré de l'invention. Cette fenêtre comprend un encadrement fixe 1 ainsi qu'une vitre 2 munie d'un encadrement mobile 3. De manière classique, cette vitre 2 et son encadrement mobile 3 forme un ensemble mobile destiné à être manipulé par un membre de l'équipage situé à l'intérieur du poste de pilotage.

Pour manoeuvrer cet ensemble mobile, le membre de l'équipage dispose d'une poignée 4 unique qui est articulée.

L'encadrement mobile 3 de la fenêtre coopère avec l'encadrement fixe 1 par des liaisons en trois points assurant une liaison isostatique entre cet encadrement mobile 3 et l'encadrement fixe 1.

Des moyens de guidage et de support autorisent l'ouverture de la fenêtre par un dégagement de l'ensemble mobile de sa position de fermeture, suivi d'un coulissement de l'ensemble mobile vers l'arrière.

La Figure 2 montre la fenêtre dans une telle position de dégagement. Le premier bord latéral 5, qui est ici le bord latéral avant de l'encadrement mobile 3, est reçu dans trois logements formés par trois butées 6, 7, 8 fixes solidaires de l'encadrement fixe 1 tandis que l'autre bord latéral 9 de cet encadrement mobile 3, ici le bord latéral arrière, est placé à distance de l'ouverture 10 délimitée par l'encadrement fixe 1.

Le déplacement de l'ensemble mobile de la position de dégagement à la position de fermeture et inversement, est réalisé par une rotation de cet ensemble autour d'un axe de rotation 11 passant par le bord latéral avant 5 de l'encadrement mobile 3 reçu dans ces logements.

Le bord latéral avant 5 de l'encadrement mobile 3 étant incliné, l'axe de rotation 11 est parallèle à ce bord latéral avant pour permettre à celui-ci d'être reçu dans les logements formés par les trois butées 6, 7, 8 fixes sur toute sa hauteur. L'encadrement mobile 3 comporte dans sa partie inférieure un bras d'extension 21 permettant au bord latéral avant 5 de cet encadrement mobile 3 de venir se placer sur cet axe de rotation 11 incliné.

De préférence, chaque butée 6, 7, 8 comprend des moyens de réglage du jeu (non représentés) entre chacune des butées 6, 7, 8 et l'encadrement mobile 3 afin d'assurer le maintien du bord latéral avant 5 de l'encadrement en cas de choc à l'oiseau.

Comme visible aux figures 1 et 3 à 5, les moyens de guidage et de support comportent un rail supérieur 12 et un rail inférieur 13 qui sont solidaires de l'encadrement fixe 1. Chacun de ces rails supérieur 12 et inférieur 13 comprend un fond et deux flancs, le rail ayant donc une section en forme de U.

Le rail inférieur 13 comprend une portion de rail principal 14 et une portion de rail secondaire 15 en communication avec cette portion de rail principal 14.

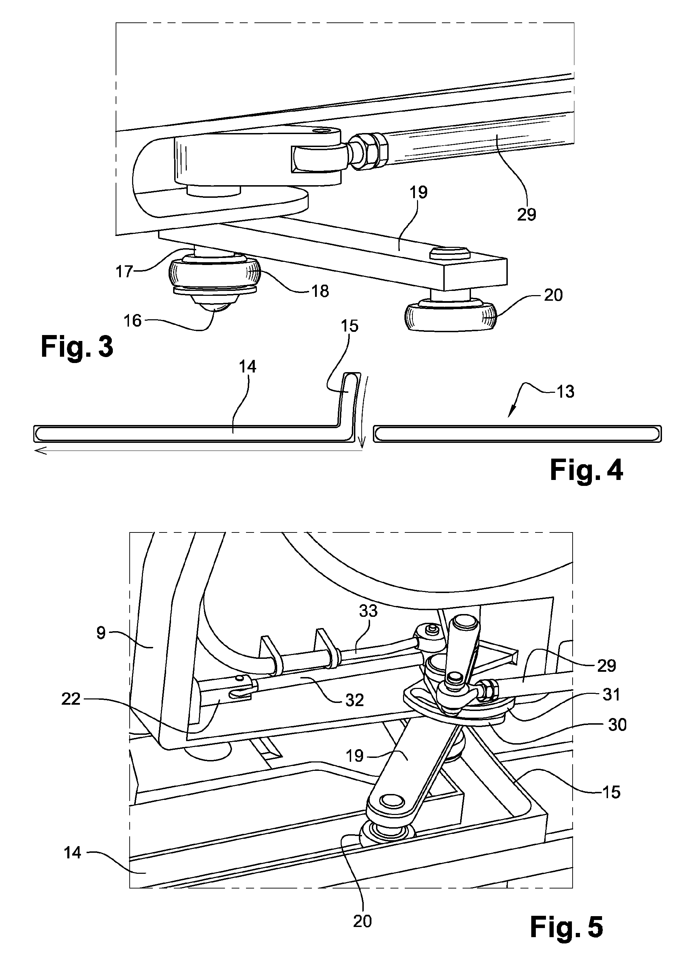

Le bord latéral arrière 9, c'est-à-dire le bord dirigé vers l'arrière de l'aéronef, de l'encadrement mobile 3 réalise un mouvement de rotation entre la position de fermeture et la position de dégagement. Cette portion de rail secondaire 15 est inclinée par rapport à la portion de rail principal 14 et a une forme de portion de cercle (Figure 4).

Chacun des moyens de guidage et de support comprend également une bille porteuse 16 (Figure 3) placée à l'extrémité d'un organe de support 17 qui est lui-même relié à l'ensemble mobile. De préférence, cet organe de support 17 comprend un corps principal et un corps secondaire solidaire de ce corps principal en étant mobile en translation par rapport à ce corps principal de sorte que la position de ce corps secondaire par rapport au corps principal peut être variée de manière à ajuster la position de l'ensemble mobile par rapport au fond de chaque rail.

Chaque bille porteuse 16 est mobile en rotation à l'extrémité de cet organe de support 17, ce qui permet avantageusement un roulement de cette bille porteuse dans plusieurs directions. Ainsi seule une telle bille porteuse autorise un passage de la portion de rail secondaire 15 courbe à la portion de rail principal 14 ayant une direction différente.

Chaque ensemble de support et de guidage comporte de plus un galet de roulement 18 pour assurer le guidage latéral de la bille porteuse dans les rails inférieur 13 et supérieur 12 correspondants.

Une bille porteuse 16 est placée aux extrémités supérieure et inférieure de l'encadrement mobile 3 du côté du bord latéral 5 dirigé vers l'avant de l'aéronef, de cet encadrement mobile 3, ces billes porteuses 16 rendent possible la mise en rotation de l'ensemble mobile.

L'organe de support de chaque bille porteuse est, par exemple, réalisé en acier zingué, les billes porteuses étant en acier inoxydable et les galets de roulement 18 en acier.

Un de ces organes de support 17 a été positionné directement en dessous de l'ensemble mobile afin de supporter directement l'effort du poids de l'ensemble. Plus précisément, cet ensemble de support et de guidage est placé au niveau du bord latéral arrière 9 de l'encadrement mobile 3. Cet ensemble de support et de guidage comprend de plus un levier 19, ce levier étant mobile en rotation dans un plan parallèle au seuil de fenêtre. En bout de levier 19, un simple galet de roulement 20 suffit à créer le mouvement d'ouverture/fermeture du dispositif d'ouverture/fermeture de la fenêtre, en s'appuyant contre les flancs du rail inférieur 13.

Les flancs des rails supérieur 12 et inférieur 13 sont espacés d'une distance supérieure au diamètre des galets 18 entourant les organes supports 17. Les billes porteuses 16 ayant un contact ponctuel avec le fond de ces rails 12, 13, celui-ci comporte avantageusement un revêtement de surface protecteur. Ce fond pourra ainsi être durci par exemple par céramisation.

La fenêtre comporte également un dispositif de verrouillage/déverrouillage de l'ensemble mobile comprenant trois organes de blocage 22, ou verrous, placés uniquement sur le bord latéral arrière 9 de l'encadrement mobile 3 pour verrouiller l'ensemble mobile en position de fermeture.

Avec un tel nombre d'organes de blocage 22 et leur positionnement sur le montant latéral arrière de l'encadrement mobile 3, il est avantageusement possible de diminuer de manière significative l'épaisseur de ce montant latéral arrière tout en assurant une résistance de la fenêtre au choc à l'oiseau.

Chaque organe de blocage 22 comporte un bras mobile coopérant avec une butée fixe 23 correspondante placée sur l'encadrement fixe 1 pour assurer le verrouillage de l'ensemble mobile en position de fermeture.

Chaque bras mobile comporte une partie plane 24 et est muni d'un galet 25 à son extrémité. Ainsi, par un mouvement de translation uniquement, chaque organe de blocage 22 vient rouler sur la butée fixe 23.

La butée fixe 23 comporte, sur sa partie qui entre en contact avec le galet 25 de l'organe de blocage, ou verrou 22, successivement une première pente 26, un plat 27 et une seconde pente 28.

La forme de la butée fixe 23 permet avantageusement de retrouver les deux fonctions assurées par le principe d'arc-boutement des fenêtres de l'art antérieur.

La première pente 26 rencontrée par le galet 25 assure l'écrasement du joint (non représenté) tandis que la seconde pente 28 empêche le déverrouillage de l'ensemble mobile en cas de choc à l'oiseau. Cette seconde pente 28 permet aussi à la partie plane 24 du verrou de porter directement sur la butée fixe 23 : le choc à l'oiseau n'est pas repris par l'axe du galet mais bien par la partie plane 24 de l'organe de blocage 22 qui a alors une fonction de butée.

Au niveau de l'organe de manoeuvre de l'ensemble mobile, et afin de diminuer l'effort dû à la réaction du joint de l'encadrement mobile 3 durant son écrasement, le joint sera de préférence un joint « auto-gonflant ». Ce joint est troué sur toute sa périphérie ce qui permet de réduire considérablement l'effort de réaction tout en assurant l'étanchéité (30% de compression).

La commande des verrous 22 placés sur le bord latéral arrière 9 de l'encadrement mobile 3 est obtenue par l'actionnement de la poignée 4 reliée par un levier 29, à deux cames de débrayage 30, 31 superposées.

Lors des 45 premiers degrés de rotation de la poignée 4 de manoeuvre, les verrous 22 sont actionnés par la came de débrayage 31, puis, pour les 90° degrés de rotation suivant de la poignée 4 de manoeuvre, l'autre came de débrayage 30 commande la libération de l'ensemble mobile.

Par conséquent le déverrouillage, puis la libération de l'ensemble mobile sont réalisés en 135° de rotation de la poignée 4.

Le verrou 22 placé dans la partie inférieure du bord latéral arrière 9 étant avantageusement directement entraîné par la came de débrayage 31 par le biais d'une bielle 32, quant au verrou 22 placé dans sa partie supérieure, il est commandé par un câble de traction et de poussée 33 (appelé communément commande à billes ou en anglais « push pull cable ») de sorte que le mouvement du verrou de la partie inférieure entraîne celui du verrou de la partie supérieure.

Une pièce de liaison (non représentée) entre le verrou 22 de la partie supérieure du bord latéral arrière 9 et le câble de traction et de poussée 33 permet de rajouter le verrou intermédiaire 22. Cette pièce de liaison est juste guidée en translation sur l'encadrement mobile 3.

## Revendications

1. Fenêtre ouvrante d'aéronef, comprenant :
- au moins une vitre (2) munie d'un encadrement mobile (3),
- un ensemble comprenant ledit encadrement mobile (3) et ladite au moins une vitre (2), étant mobile par rapport à un encadrement fixe (1),
- un organe de manoeuvre (4) dudit ensemble mobile,
- un dispositif d'ouverture / fermeture et verrouillage/déverrouillage dudit ensemble mobile actionné par ledit organe de manoeuvre (4), et
- des moyens de guidage et de support dudit ensemble mobile,
- ledit encadrement fixe (1) comportant au moins un logement (6, 7, 8) pour recevoir une partie d'un premier bord latéral (5) dudit encadrement mobile (3), ladite partie dudit premier bord latéral (5) venant en appui dans ledit au moins un logement (6, 7, 8) par lequel ou lesquels ledit premier bord latéral est maintenu lorsque la fenêtre est en position de fermeture,
- ladite partie au moins du premier bord latéral étant reçue dans ledit logement (6, 7, 8), lesdits moyens de guidage et de support dudit ensemble mobile autorisent une rotation dudit ensemble autour d'un axe de rotation (11) passant par ledit premier bord latéral (5) de manière à placer l'autre bord latéral dudit encadrement mobile (3) en position de fermeture ou de dégagement,
- lesdits moyens de guidage et de support comprenant un rail supérieur (12) et un rail inférieur (13) solidaires de l'encadrement fixe (1) ainsi que des ensembles de guidage et de support, **caractérisée en ce que**
* chacun de ces ensembles de guidage et de support comprend un organe de support (17) pour assurer une fonction support et une bille porteuse (16) placée à l'extrémité de cet organe de support (17), ledit organe de support (17) étant relié à l'encadrement mobile (3) et ladite bille porteuse (16) se déplaçant dans un rail correspondant desdits rails supérieur et inférieur, et
* ledit rail inférieur rail inférieur comprenant une portion de rail principal et une portion de rail secondaire en communication l'une avec l'autre, ladite portion de rail secondaire est inclinée par rapport à ladite portion de rail principal en ayant une forme courbe pour permettre la rotation dudit ensemble mobile entre une position de fermeture et une position de dégagement.

2. Fenêtre selon la revendication 1, **caractérisée en ce que** ledit premier bord latéral (5) étant incliné, ledit axe de rotation (11) est parallèle audit premier bord latéral (5) pour permettre audit premier bord latéral d'être reçu dans ledit au moins un logement (6, 7, 8) sur toute sa hauteur.

3. Fenêtre selon la revendication 2, **caractérisée en ce que** les parties supérieure et inférieure dudit premier bord latéral (5) étant placées sur ledit axe de rotation (11), au moins une desdites parties comprend un bras d'extension (21) dudit encadrement mobile (3).

4. Fenêtre selon l'une quelconque des revendications 1 à 3, **caractérisée en ce que** l'organe de support (17) comporte de plus un galet de roulement (18) placé en contact avec un organe de guidage (12, 13) pour assurer une fonction de guidage.

5. Fenêtre selon la revendication 1, **caractérisée en ce que** ledit dispositif d'ouverture/ fermeture comprend au moins un organe de blocage (22) placé uniquement sur l'autre bord latéral dudit encadrement mobile (3) pour immobiliser ledit ensemble en position de fermeture.

6. Fenêtre selon la revendication 5, **caractérisée en ce que** chacun desdits organes de blocage (22) comporte un bras mobile comportant une découpe plane qui coopère avec une butée fixe (23) placée sur ledit encadrement fixe (1) pour assurer le verrouillage dudit ensemble mobile en position de fermeture.

7. Fenêtre selon la revendication 6, caractérisée que ladite butée fixe (23) comprend au moins une première pente (26) et une seconde pente (28), la première pente (26) assurant l'écrasement de l'élément d'étanchéité de l'encadrement mobile (3) tandis que la seconde pente (28) est destinée à empêcher le déverrouillage de l'ensemble mobile en cas de choc à l'oiseau.

8. Fenêtre selon la revendication 1, **caractérisée en ce que** ledit organe de manoeuvre (4) comporte une seule poignée (4) autorisant l'actionnement du dispositif de verrouillage/déverrouillage, l'actionnement du dispositif d'ouverture / fermeture et le déplacement de la fenêtre, ladite poignée (4) étant articulée.

9. Fenêtre selon la revendication 8, **caractérisée en ce que** ladite poignée (4) est reliée à un bras dont l'extrémité actionne de manière séquentielle deux cames de débrayage (30, 31) superposées pour assurer le verrouillage/déverrouillage du dispositif de verrouillage/déverrouillage dudit ensemble mobile et le mouvement d'ouverture ou de fermeture du dispositif d'ouverture/fermeture de ladite fenêtre.

10. Fenêtre selon la revendication 9, **caractérisée en ce que** ledit dispositif de verrouillage/déverrouillage comprenant des organes de blocage (22) placés sur l'autre bord latéral dudit encadrement mobile (3), ladite came (31) assurant le verrouillage/déverrouillage du dispositif de verrouillage/déverrouillage, est reliée à au moins certains desdits organes de blocage (22) par un câble de traction et de poussée (33).

11. Fenêtre selon l'une quelconque des revendications 1 à 10, **caractérisée en ce que** lesdits logements comportent au moins trois butées fixes (6, 7, 8), chacune desdites butées comprenant des moyens de réglage du jeu entre ladite butée et ledit encadrement mobile (3).

12. Poste de pilotage d'un aéronef équipé d'au moins une fenêtre selon l'une quelconque des revendications 1 à 11.

13. Aéronef comprenant un poste de pilotage, **caractérisé en ce que** ledit poste de pilotage comporte au moins une fenêtre selon l'une quelconque des revendications 1 à 11.

## Patentansprüche

1. Ausstellbares Fenster eines Luftfahrzeugs, das enthält:
- mindestens eine mit einem bewegliche Rahmen (3) versehene Glasscheibe (2),
- eine den beweglichen Rahmen (3) und die mindestens eine Glasscheibe (2) enthaltende Einheit, die bezüglich eines ortsfesten Rahmens (1) beweglich ist,
- ein Betätigungsorgan (4) der beweglichen Einheit,
- eine Öffnungs-/Schließ- und Verriegelungs-/Entriegelungsvorrichtung der beweglichen Einheit, die vom Betätigungsorgan (4) betätigt wird, und
- Führungs- und Stützeinrichtungen der beweglichen Einheit,
- wobei der ortsfeste Rahmen (1) mindestens eine Aufnahme (6, 7, 8) aufweist, um einen Teil eines ersten Seitenrands (5) des beweglichen Rahmens (3) aufzunehmen, wobei der Teil des ersten Seitenrands (5) in der mindestens einen Aufnahme (6, 7, 8) in Auflage kommt, durch die der erste Seitenrand gehalten wird, wenn das Fenster in der Schließstellung ist,
- wobei, wenn mindestens der Teil des ersten Seitenrands in der Aufnahme (6, 7, 8) aufgenommen ist, die Führungs- und Stützeinrichtungen der beweglichen Einheit eine Drehung der Einheit um eine durch den ersten Seitenrand (5) gehende Drehachse (11) erlauben, um den anderen Seitenrand des beweglichen Rahmens (3) in der Schließ- oder Auslösestellung anzuordnen,
- die Führungs- und Stützeinrichtungen enthalten
- eine obere Schiene (12) und eine untere Schiene (13), die fest mit dem ortsfesten Rahmen verbunden sind, sowie
- Führungs- und Stützeinrichtungen,
**dadurch gekennzeichnet, dass**
- jede dieser Führungs- und Stützeinrichtungen ein Stützorgan (17), um eine Stützfunktion zu gewährleisten, und eine Tragkugel (16) enthält, die am Ende dieses Stützorgans (17) angeordnet ist, wobei das Stützorgan (17) mit dem beweglichen Rahmen (3) verbunden ist und die Tragkugel (16) sich in einer entsprechenden Schiene der oberen und unteren Schienen verschiebt, und
- die untere Schiene einen Hauptschienenabschnitt und einen Sekundärschienenabschnitt enthält, die miteinander in Verbindung stehen, wobei der Sekundärschienenabschnitt bezüglich des Hauptschienenabschnitts geneigt ist, indem er eine gekrümmte Form hat, um die Drehung der beweglichen Einheit zwischen einer Schließstellung und eine Auslösestellung zu erlauben.

2. Fenster nach Anspruch 1, **dadurch gekennzeichnet, dass** bei geneigtem ersten Seitenrand (5) die Drehachse (11) parallel zum ersten Seitenrand (5) ist, um es dem ersten Seitenrand zu ermöglichen, in der mindestens einen Aufnahme (6, 7, 8) über seine ganze Höhe aufgenommen zu werden.

3. Fenster nach Anspruch 2, **dadurch gekennzeichnet, dass**, da der obere und der untere Teil des ersten Seitenrands (5) auf der Drehachse (11) angeordnet sind, mindestens einer der Teile einen Verlängerungsarm (21) des beweglichen Rahmens (3) enthält.

4. Fenster nach einem der Ansprüche 1 bis 3, **dadurch gekennzeichnet, dass** das Stützorgan (17) außerdem eine Laufrolle (18) aufweist, die in Kontakt mit einem Führungsorgan (12, 13) angeordnet ist, um eine Führungsfunktion zu gewährleisten.

5. Fenster nach Anspruch 1, **dadurch gekennzeichnet, dass** die Öffnungs-/Schließvorrichtung mindestens ein Blockierorgan (22) enthält, das nur auf dem anderen Seitenrand des beweglichen Rahmens (3) angeordnet ist, um die Einheit in der Schließstellung zu fixieren.

6. Fenster nach Anspruch 5, **dadurch gekennzeichnet, dass** jedes der Blockierorgane (22) einen beweglichen Arm aufweist, der einen eben Ausschnitt aufweist, der mit einem ortsfesten Anschlag (23) zusammenwirkt, der auf dem ortsfesten Rahmen (1) angeordnet ist, um die Verriegelung der beweglichen Einheit in der Schließstellung zu gewährleisten.

7. Fenster nach Anspruch 6, **dadurch gekennzeichnet, dass** der ortsfeste Anschlag (23) mindestens eine erste Schräge (26) und eine zweite Schräge (28) aufweist, wobei die erste Schräge (26) das Zusammendrücken des Dichtelements des beweglichen Rahmens (3) gewährleistet, während die zweite Schräge (28) dazu bestimmt ist, das Entriegeln der beweglichen Einheit im Fall eines Vogelschlags zu verhindern.

8. Fenster nach Anspruch 1, **dadurch gekennzeichnet, dass** das Betätigungsorgan (4) nur einen Griff (4) aufweist, der die Betätigung der Verriegelungs-/Entriegelungsvorrichtung, die Betätigung der Öffnungs-/Schließvorrichtung und das Verschieben des Fensters erlaubt, wobei der Griff (4) gelenkig ist.

9. Fenster nach Anspruch 8, **dadurch gekennzeichnet, dass** der Griff (4) mit einem Arm verbunden ist, dessen Ende sequentiell zwei übereinander angeordnete Ausrücknocken (30, 31) betätigt, um das Verriegeln/Entriegeln der Verriegelungs- /Entriegelungsvorrichtung der beweglichen Einheit und die Öffnungs- oder Schließbewegung der Öffnungs-/Schließvorrichtung des Fensters zu gewährleisten.

10. Fenster nach Anspruch 9, **dadurch gekennzeichnet, dass**, da d i e Verriegelungs-/Entriegelungsvorrichtung auf dem anderen Seitenrand des beweglichen Rahmens (3) angeordnete Blockierorgane (22) enthält, die das Verriegeln/Entriegeln der Verriegelungs-/Entriegelungsvorrichtung gewährleistende Nocke (31) mit mindestens bestimmten der Blockierorgane (22) durch ein Zug- und Schubkabel (33) verbunden ist.

11. Fenster nach einem der Ansprüche 1 bis 10, **dadurch gekennzeichnet, dass** die Aufnahmen mindestens drei ortsfeste Anschläge (6, 7, 8) aufweisen, wobei jeder der Anschläge Einstelleinrichtungen des Spiels zwischen dem Anschlag und dem beweglichen Rahmen (3) enthalten.

12. Cockpit eines Luftfahrzeugs, das mit mindestens einem Fenster nach einem der Ansprüche 1 bis 11 ausgestattet ist.

13. Luftfahrzeug, das ein Cockpit enthält, **dadurch gekennzeichnet, dass** das Cockpit mindestens ein Fenster nach einem der Ansprüche 1 bis 11 aufweist.

## Claims

1. Opening window for an aircraft, comprising:
- at least one pane (2) provided with a movable frame (3),
- an assembly comprising said movable frame (3) and said at least one pane (2), being movable with respect to a fixed frame (1),
- a member (4) for operating said movable assembly,
- a device for opening/closing and for locking/unlocking said movable assembly, actuated by said operating member (4), and
- means for guiding and for supporting said movable assembly,
- said fixed frame (1) comprising at least one retainer (6, 7, 8) for receiving part of a first lateral edge (5) of said movable frame (3), said part of said first lateral edge (5) coming to press in said at least one retainer (6, 7, 8) by means of which said first lateral edge is held when the window is in the closed position,
- said part at least of the first lateral edge being received in said retainer (6, 7, 8), said means for guiding and for supporting said movable assembly allowing said assembly to rotate about an axis of rotation (11) which passes through said first lateral edge (5) so as to place the other lateral edge of said movable frame (3) in a closed or free position,
- said guiding and support means comprising:
- an upper rail (12) and a lower rail (13) which are secured to the fixed frame (1) and
- guiding and support assemblies,
**characterized in that**
- each of these guiding and support assemblies comprises a support member (17) for providing support and a load ball (16) placed at the end of this support member (17), said support member (17) being connected to the movable frame (3) and said load ball (16) moving in a corresponding rail of said upper and lower rails, and
- said lower rail comprising a main rail portion and a secondary rail portion which communicate with one another, said secondary rail portion is inclined with respect to said main rail portion, having a curved shape so as to allow said movable assembly to rotate between a closed position and a free position.

2. Window according to Claim 1, **characterized in that**, said first lateral edge (5) being inclined, said axis of rotation (11) is parallel to said first lateral edge (5) such that said first lateral edge can be received in said at least one retainer (6, 7, 8) over its entire height.

3. Window according to Claim 2, **characterized in that**, the upper and lower parts of said first lateral edge (5) being positioned on said axis of rotation (11), at least one of said parts comprises an extension arm (21) of said movable frame (3).

4. Window according to any one of Claims 1 to 3, **characterized in that** the support member (17) additionally comprises a running roller (18) placed in contact with a guiding member (12, 13) so as to act as a guide.

5. Window according to Claim 1, **characterized in that** said opening/closing device comprises at least one blocking member (22) positioned only on the other lateral edge of said movable frame (3) in order to immobilize said assembly in the closed position.

6. Window according to Claim 5, **characterized in that** each of said blocking members (22) comprises a movable arm comprising a flat cutout which engages with a fixed endstop (23) positioned on said fixed frame (1) so as to lock said movable assembly in the closed position.

7. Window according to Claim 6, **characterized in that** said fixed endstop (23) comprises at least one first slope (26) and a second slope (28), the first slope (26) depressing the sealing element of the movable frame (3) while the second slope (28) is designed to prevent the movable assembly from coming unlocked in the event of a bird strike.

8. Window according to Claim 1, **characterized in that** said operating member (4) comprises a single handle (4) by means of which it is possible to actuate the locking/unlocking device, to actuate the opening/closing device and to move the window, said handle (4) being articulated.

9. Window according to Claim 8, **characterized in that** said handle (4) is connected to an arm, the end of which actuates, in a sequential manner, two superposed disengagement cams (30, 31) in order to lock/unlock the locking/unlocking device of said movable assembly and to provide the opening or closing movement of the opening/closing device of said window.

10. Window according to Claim 9, **characterized in that**, said locking/unlocking device comprising blocking members (22) positioned on the other lateral edge of said movable frame (3), said cam (31) which locks/unlocks the locking/unlocking device is connected to at least some of said blocking members (22) by a push/pull cable (33).

11. Window according to any one of Claims 1 to 10, **characterized in that** said retainers comprise at least three fixed endstops (6, 7, 8), each of said endstops comprising means for adjusting the play between said endstop and said movable frame (3).

12. Aircraft cockpit equipped with at least one window according to any one of Claims 1 to 11.

13. Aircraft comprising a cockpit, **characterized in that** said cockpit comprises at least one window according to any one of Claims 1 to 11.
